(19) **Europäisches Patentamt**
**European Patent Office**
**Office européen des brevets**

(11) **EP 2 354 594 B1**

(12) **EUROPEAN PATENT SPECIFICATION**

(45) Date of publication and mention
of the grant of the patent:
**29.05.2013 Bulletin 2013/22**

(51) Int Cl.:
**F16H 1/32** (2006.01)

(21) Application number: **09824678.8**

(22) Date of filing: **30.09.2009**

(86) International application number:
**PCT/JP2009/067052**

(87) International publication number:
**WO 2010/052978 (14.05.2010 Gazette 2010/19)**

(54) **POWER TRANSMITTING GEAR DEVICE**

KRAFTÜBERTRAGUNGSGETRIEBE

DISPOSITIF D EMBRAYAGE À TRANSMISSION D ÉNERGIE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **05.11.2008 JP 2008284396**

(43) Date of publication of application:
**10.08.2011 Bulletin 2011/32**

(73) Proprietor: **Nabtesco Corporation
Tokyo 105-0022 (JP)**

(72) Inventor: **MIYOSHI Hiroyuki
Tsu-shi
Mie 514-8533 (JP)**

(74) Representative: **Vossius & Partner
Siebertstrasse 4
81675 München (DE)**

(56) References cited:
**JP-A- 6 050 395          JP-A- 6 050 395
JP-A- 6 241 282          JP-A- 7 248 046
JP-A- 2006 071 017**

Remarks:
The file contains technical information submitted after
the application was filed and not included in this
specification

**Description**

TECHNICAL FIELD

This application relates to an eccentric oscillating-type gear transmission. In particular, this application relates to an eccentric oscillating-type gear transmission in which backlash is reduced.

BACKGROUND ART

An eccentric oscillating-type gear transmission that comprises an internal gear, an external gear meshing with the internal gear, and a carrier supporting the external gear so that it can eccentrically rotate is known. The carrier is coaxially supported on the internal gear. In this gear transmission, the carrier and the internal gear rotate relative to one another as the external gear eccentrically rotates.

The carrier comprises a crankshaft. The external gear is eccentrically rotated by the rotation of the crankshaft. In case the crankshaft and the carrier are coaxially disposed, torque pins may be provided for transmitting torque from the external gear to the carrier. The torque pins are affixed to the carrier at a position offset from the axis of the carrier. The torque pins pass through through holes formed in the external gear. Since the diameter of the through holes formed in the external gear is greater than the diameter of the torque pins, the external gear can eccentrically rotate. When the crankshaft rotates, the external gear eccentrically rotates relative to the torque pins (carrier) while the torque pins make contact with the inner circumferences of the through holes formed in the external gear. The torque is transmitted from the external gear to the carrier at the points where the torque pins and the external gear make contact. This type of gear transmission is taught in, e.g., Japanese Patent Application Publication No. 2006-71017. In the following description, Japanese Patent Application Publication No. 2006-71017 is called Patent Document 1. Further, in the present specification, a wall surface by which a hole is formed is called the "inner circumference of the hole".

In the gear transmission of Patent Document 1, a ring member is fitted onto the outer circumference of the torque pin so as to reduce friction between the carrier and the external gear. The ring member functions as the equivalent of a rolling bearing relative to the external gear. On the other hand, since the ring member makes contact with the torque pin at the inner circumference of the ring member, the ring member functions as the equivalent of a sliding bearing relative to the carrier.

SUMMARY OF THE INVENTION

Technical Problem

In the gear transmission of Patent Document 1, it is necessary to form a clearance between the ring members and the torque pins so that the ring members will function as the equivalent of a sliding bearing. This clearance is the cause of backlash. The present specification teaches a technique that reduces the backlash of the gear transmission by making the ring members unnecessary without increasing the friction between the carrier and the external gear.

Solution to the Technical Problem

A gear transmission taught in the present specification comprises an internal gear, an external gear meshing with the internal gear, and a carrier supporting the external gear to eccentrically rotate. The carrier is coaxially supported on the internal gear. A fitting hole that extends alongside the axis of the internal gear is formed in the carrier. A through hole is formed in the external gear, and this through hole is formed so as to overlap with a portion of the fitting hole when viewed along the axis of the internal gear. The gear transmission is characterized in having the fitting hole and the through hole, and in comprising a torque pin that freely fits into the fitting hole and the through hole. Since the torque pin freely fits into both the fitting hole and the through hole, the external gear can eccentrically rotate.

In the above-mentioned gear transmission, the torque pin that passes through the through hole of the external gear freely fits into the fitting hole of the carrier. When the external gear eccentrically rotates, the outer circumference surface of the torque pin makes contact with the fitting hole and the through hole at two opposing points in the radial direction of the torque pin. Consequently, the torque pin functions as the equivalent of a rolling bearing relative to the carrier, and also functions as the equivalent of a rolling bearing relative to the external gear. The clearance required by a rolling bearing is smaller than the clearance required by a sliding bearing. Consequently, this gear transmission can make the clearance between the carrier and the external gear smaller than the gear transmission of Patent Document 1, which utilized a ring member. This gear transmission can reduce backlash by making the ring member unnecessary without increasing the friction between the carrier and the external gear.

The fitting hole, the through hole and the torque pin may satisfy the following relationship. The following formulas (1) and (2) may be satisfied:

$$R_1/(R_1 - d_1) = R_2/(R_2 - d_2) \qquad (1)$$

$$d_1 + d_2 = 2 \times d_3 \qquad (2)$$

where $R_1$ is the diameter of the fitting hole, $d_1$ is the maximum length of a gap between the inner circumference of the fitting hole and the outer circumference surface of the torque pin, $R_2$ is the diameter of the through hole, $d_2$ is the maximum length of a gap between the inner circumference of the through hole and the outer circumference surface of the torque pin, and $d_3$ is the offset amount from the axis of the carrier to the center of the external gear. In case both formulas (1) and (2) are simultaneously satisfied, the functioning of the torque pin as a rolling bearing relative to both the through hole and the fitting hole is geometrically ensured. Therefore, the ability of the torque pin to rotate without sliding while making contact with both the through hole and the fitting hole is geometrically ensured.

Effect of the Invention

A gear transmission in which the occurrence of backlash is reduced can be realized using the technique taught in the present specification.

BRIEF DESCRIPTION OF THE DRAWINGS

Fig. 1 shows a cross-sectional view of a gear transmission of a first embodiment.
Fig. 2 shows a cross-sectional view along line II-II of Fig. 1.
Fig. 3 shows a partial enlarged view of the gear transmission of the first embodiment.
Fig. 4 shows a view describing movement of a torque pin.
Fig. 5 shows a cross-sectional view of a gear transmission of a second embodiment.
Fig. 6 shows a cross-sectional view along line VI-VI of Fig. 5.
Fig. 7 shows a partial enlarged view of the gear transmission of the second embodiment.
Fig. 8 shows a cross-sectional view of a gear transmission of a third embodiment.
Fig. 9 shows a cross-sectional view of a gear transmission of a fourth embodiment.
Fig. 10 shows a cross-sectional view along line X-X of Fig. 9.
Fig. 11 shows a cross-sectional view of a gear transmission of a fifth embodiment.
Fig. 12 shows a cross-sectional view of a gear transmission of a sixth embodiment.
Fig. 13 shows a cross-sectional view along line XIII-XIII of Fig. 12.

DESCRIPTION OF THE EMBODIMENTS

Before describing the embodiments, several technical features of the embodiments will be noted. Furthermore, the principal technical features are included in the descriptions of the embodiments.
(Feature 1) In gear transmissions 100, 200, 300, 400 and 500, a through hole is formed in a torque pin, this through hole extending along the axis of the torque pin.
(Feature 2) A carrier is configured by a pair of opposing plates and carrier pins that join the two plates. In the gear transmissions 200, 300, 400 and 500, the carrier pins pass through the through holes of the torque pins.
(Feature 3) In the carrier, a plurality of fitting holes that extend alongside the axis of the internal gear is formed so as to be aligned along the circumferential direction.
(Feature 4) When viewed along the axis of the internal gear, through holes are formed in the external gear at positions corresponding to the plurality of fitting holes.
(Feature 5) In the gear transmissions 200 and 400, the diameter of the torque pins at a cross-section of the fitting holes of the carrier is smaller than the diameter of the torque pins at a cross-section of first through holes of the external gear.
(Feature 6) In the gear transmissions 100, 300, 500 and 600, the diameter of the fitting holes of the carrier is equal to the diameter of the first through holes of the external gear.

(First Embodiment)

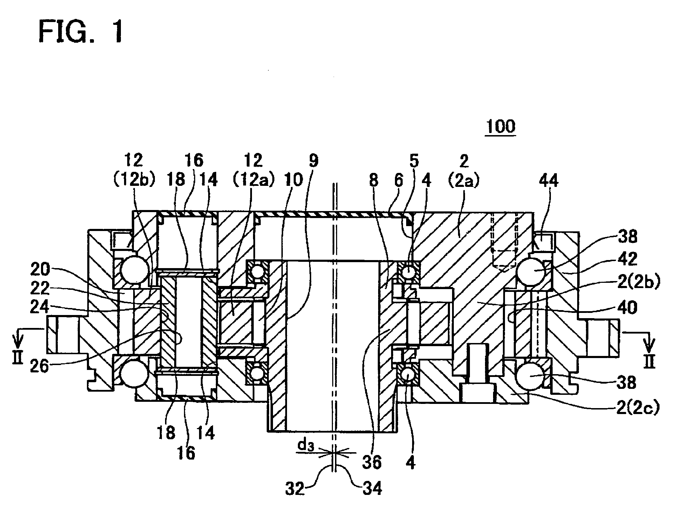

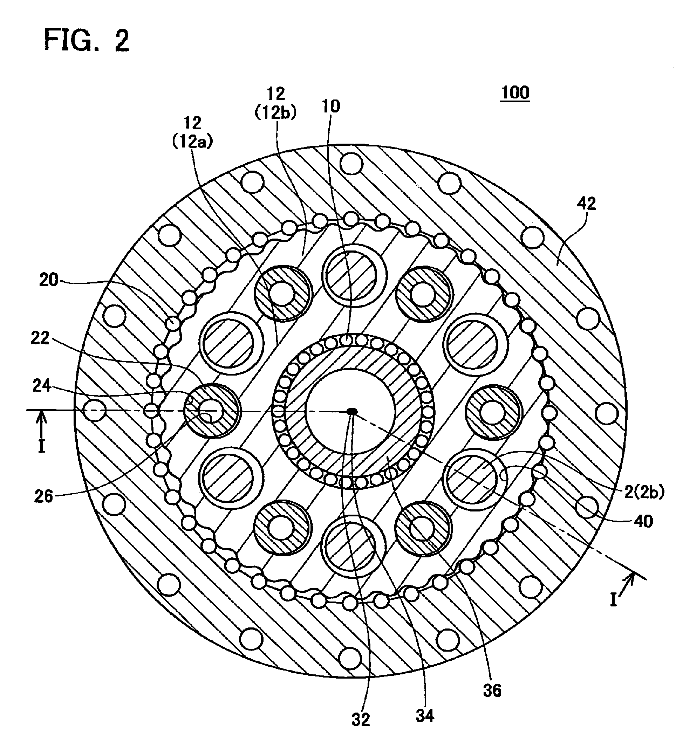

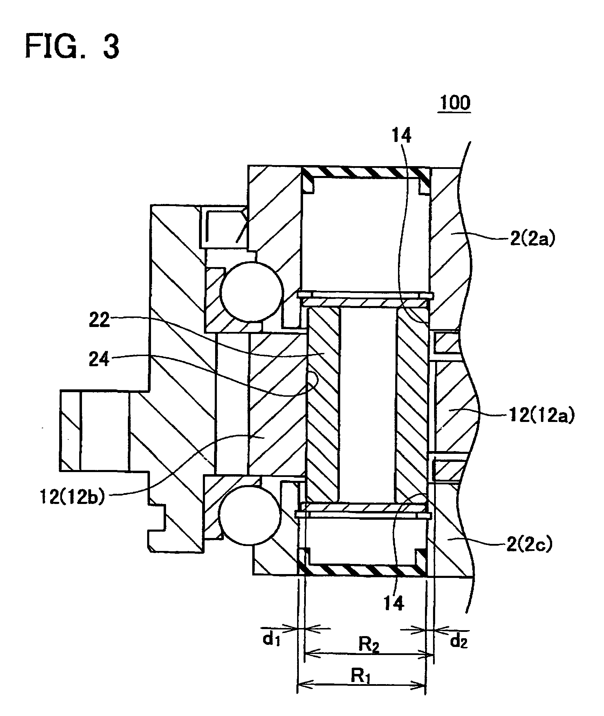

Fig. 1 shows a cross-sectional view of essential parts of a gear transmission 100. Fig. 2 shows a cross-sectional view along line II-II of Fig. 1. Fig. 3 shows a partial enlarged view of the surroundings of a torque pin 22 in Fig. 1. Further, Fig. 1 is equivalent to a cross-sectional view along line 1-1 of Fig. 2. As shown in Fig. 1 and Fig. 2, the gear transmission 100 comprises an internal gear 42, a carrier 2, an external gear 12 and a crankshaft 8. Further, although this will be described in detail below, the carrier 2 is configured by a carrier upper plate 2a, a carrier lower plate 2c and carrier pins 2b. The external gear 12 has a thin portion 12a and a thick portion 12b. The thick portion 12b is formed at the outside in the radial direction of the torque pin 22 that will be described below. Furthermore, although this will be described in detail below, in the gear transmission 100, the carrier 2 is rotated relative to the internal gear 42 by the external gear 12 eccentrically rotating. That is, the gear transmission 100 is an eccentric oscillating-type, and can output a large torque even while being compact. Consequently, the gear transmission 100 is suitable for use in a joint of an industrial robot, etc.

The internal gear 42 is formed by disposing a plurality of inner pins 20 on an inner circumference of a case of the gear transmission 100. In the following description, the internal gear 42 may, using the same reference number, be called a case 42. The carrier 2 is configured by the carrier upper plate 2a, the carrier lower plate 2c and the carrier pins 2b. The carrier upper plate 2a and the carrier lower plate 2c face one another and are joined by the carrier pins 2b. The carrier pins 2b are integrally formed with the carrier upper plate 2a. The carrier 2 is rotatably supported on the case 42 by a pair of angular ball bearings 38. The axis of the carrier 2 is equal to an axis 32 of the internal gear 42.

The crankshaft 8 is supported on the carrier 2 by a pair of deep groove ball bearings 4. The axis of crankshaft 8 is equal to the axis 32 of the internal gear 42. An eccentric body 36 is formed on the crankshaft 8. The eccentric body 36 engages with the external gear 12 via a needle roller bearing 10. Consequently, an axis 34 of the external gear 12 is offset by a distance $d_3$ from the axis 32 of the internal gear 42. When the crankshaft 8 rotates, the external gear 12 eccentrically rotates while meshing with the internal gear 42. The number of teeth of the external gear 12 differs from the number of teeth of the internal gear 42 (the number of inner pins 20). Consequently, when the crankshaft 8 rotates, the external gear 12 rotates relative to the internal gear (case) 42. As described above, since the crankshaft 8 is supported on the carrier 2 and the external gear 12 engages with the eccentric body 36 formed on the crankshaft 8, the external gear 12 can be said to be supported on the carrier 2. The gear transmission 100 is a center crank-type gear transmission.

As shown in Fig. 2, a plurality of first through holes 24 and a plurality of second through holes 40 are formed along the circumferential direction of the external gear 12. The first through holes 24 and the second through holes 40 are alternately formed. The torque pins 22 freely fit into the first through holes 24, and the carrier pins 2b freely fit into the second through holes 40. Further, the torque pins 22 make contact with the inner circumferences of the first through holes 24, but the carrier pins 2b do not make contact with the inner circumferences of the second through holes 40. Consequently, when the external gear 12 rotates relative to the internal gear 42, the carrier pins 2b do not contribute to transmitting rotational torque from the external gear 12 to the carrier 2. As shown in Fig. 1, the torque pins 22 also freely fit into fitting holes 14 formed in the carrier 2. The fitting holes 14 extend alongside the axis 32. Further, although not shown, the plurality of fitting holes 14 are formed so as to be aligned along the circumferential direction of the carrier 2. The movement of the torque pins 22, in the direction of the axis 32, is restricted by stopping members (washers) 18.

As described above, the torque pins 22 freely fit into the fitting holes 14 of the carrier 2 and into the first through holes 24 of the external gear 12. Consequently, when the external gear 12 eccentrically rotates, the external gear 12 and the carrier 2 integrally rotate relative to the case 42. When the external gear 12 rotates relative to the case 42, the rotational torque of the external gear 12 is transmitted to the carrier 2 via the torque pins 22. Consequently, the carrier 2 rotates relative to the case 42. Further, as described above, the plurality of first through holes 24 is formed in the external gear 12. Each of the plurality of first through holes 24 is formed at a position corresponding to a respective one of the plurality of fitting holes 14.

The torque pins 22 will be described in detail with reference to Fig. 3. One side of the torque pins 22 in the radial direction makes contact with the inner circumference of the fitting holes 14. At this juncture, the other side of the torque pins 22 in the radial direction makes contact with the inner circumference of the first through holes 24. In other words, both sides of the torque pins 22, in the radial direction of the torque pins 22, are held by the carrier 2 and the external gear 12. Consequently, the axes of the torque pins 22 are parallel to the axis 32. Further, distance $d_1$ represents, in a cross-section of the fitting holes 14, the difference between the diameter of the torque pins 22 and diameter $R_1$ of the fitting holes 14. Distance $d_1$ corresponds to the maximum length of a gap between the torque pins 22 and the inner circumference of the fitting holes 14. Distance $d_2$ represents, in a cross-section of the first through holes 24, the difference between the diameter of the torque pins 22 and diameter $R_2$ of the first through holes 24. Distance $d_2$ corresponds to the maximum length of a gap between the torque pins 22 and the inner circumference of the first through holes 24. Further, in the gear transmission 100, the diameter $R_1$ of the fitting holes 14 is equal to diameter $R_2$ of the first through holes 24. Further, the diameter (outer diameter) of the torque pins 22 is equal across the entire direction of the axis 32 (see Fig. 1). Consequently, the diameter of the torque pins 22 in the cross-section of the fitting holes 14 is equal to the diameter of the torque pins 22 in the cross-section of the first through holes 24. Consequently, in the gear transmission

100, distance $d_1$ is equal to distance $d_2$. Further, offset distance $d_3$ (see Fig. 1) from the axis 34 of the external gear 12 to the axis 32 of the internal gear 42 can be said to be equal to both distance $d_1$ and distance $d_2$. In other words, the gear transmission 100 satisfies the relationship distance $d_1$ = distance $d_2$ = distance $d_3$.

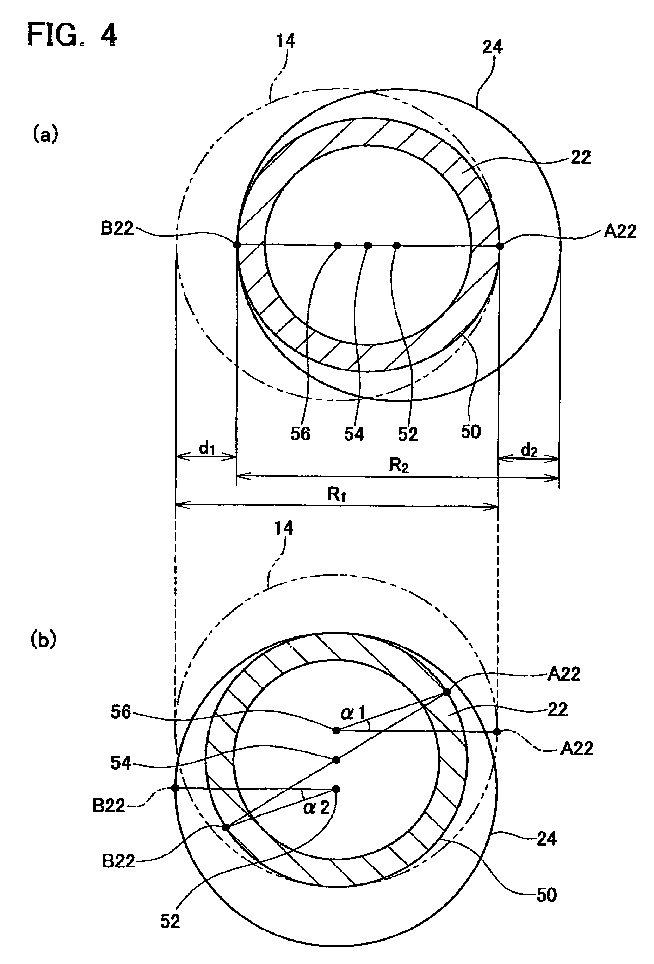

The movement of the torque pins 22 when the external gear 12 eccentrically rotates will be described with reference to Fig. 4. Fig. 4 (a) shows the positional relationship of the fitting hole 14, the first through hole 24 and the torque pin 22 in the state of Fig. 2. Further, to facilitate the description, in Fig. 4, distance $d_1$ and distance $d_2$ have been made larger than distance $d_1$ and distance $d_2$ of Fig. 3. Further, Fig. 4 (b) shows a state in which the external gear 12 has eccentrically rotated 90° from the state of Fig. 2. Reference number 52 indicates the center of the first through hole 24, reference number 54 indicates the center of the torque pin 22, and reference number 56 indicates the center of the fitting hole 14.

As shown in Fig. 4, from a plan view of the gear transmission 100, the first through holes 24 overlap with a portion of the fitting holes 14. In other words, a center 52 of the first through holes 24 is offset from a center 56 of the fitting holes 14, and the offset amount is smaller than the radius of the fitting hole 14. When the external gear 12 eccentrically rotates, the centers 52 of the first through holes 24 move about the centers 56 of the fitting holes 14. At this juncture, the centers 54 of the torque pins 22 also move about the centers 56 of the fitting holes 14. The torque pins 22 move about the centers 56 while rolling within the fitting holes 14. In other words, while rotating, the torque pins 22 eccentrically rotate relative to the fitting holes 14 (the carrier 2). If the first through holes 24 of the external gear 12 are taken as the norm, it can be said that while rotating, the torque pins 22 eccentrically rotate relative to the first through holes 24 (the external gear 12).

Reference number A22 indicates a contact point where the torque pin 22 makes contact with the fitting hole 14 in the state (a). Reference number B22 indicates a contact point where the torque pin 22 makes contact with the first through hole 24 in the state (a). When the external gear 12 eccentrically rotates by 90°, the contact points A22 and B22 move to the positions indicated in (b). In the state (b), the contact point A22 is away from the fitting hole 14. Similarly, the contact point B22 is away from the first through hole 24. The contact point A22 rotates by angle $\alpha 1$ $\alpha 1$ relative to the center 56 of the fitting hole 14. The contact point B22 rotates by angle $\alpha 2$ relative to the center 52 of the first through hole 24. In the gear transmission 100, angle $\alpha 1$ is equal to angle $\alpha 2$. This is because the ratio of the length of an outer circumference surface 50 of the torque pins 22 relative to the length of the inner circumference of the fitting holes 14 is equal to the ratio of the length of the outer circumference surface 50 of the torque pins 22 relative to the length of the inner circumference of the first through holes 24. In other words, the ratio of the diameter $R_1$ of the fitting holes 14 to the diameter ($R_1 - d_1$) of the torque pins 22 within the fitting holes 14 is equal to the ratio of the diameter $R_2$ of the first through holes 24 to the diameter ($R_2 - d_2$) of the torque pins 22 within the first through holes 24. Consequently, the relationship $R_1/(R_1 - d_1) = R_2/(R_2 - d_2)$ (formula 1) is satisfied. When (formula 1) is satisfied, the ability of the torque pins 22 to roll without sliding relative to both the external gear 12 and the carrier 2 is geometrically ensured.

As described above, the torque pins 22 function as the equivalent of rolling bearings relative to both the external gear 12 and the carrier 2. Consequently, the clearance between the external gear 12 and the carrier 2 can be made smaller by the torque pins 22. The backlash of the gear transmission 100 can thereby be reduced. Further, in the gear transmission 100, the ability of the torque pins 22 to roll without sliding relative to both the external gear 12 and the carrier 2 is geometrically ensured. Consequently, when torque is transmitted from the external gear 12 to the carrier 2, the transmission loss of the torque is small.

As described above, in the gear transmission 100, distance $d_1$ and distance $d_2$ are equal, and the outer diameter of the torque pins 22 is constant. Consequently, diameter $R_1$ and diameter $R_2$ are equal. That is, if the outer diameter of the torque pins 22 is constant, by satisfying the relationship distance $d_1$ = distance $d_2$, the torque pins 22 function as the equivalent of rolling bearings relative to both the external gear 12 and the carrier 2. Further, if the relationship distance $d_1$ = distance $d_2$ is satisfied, the relationship distance $d_1$ = distance $d_2$ = distance $d_3$ is satisfied. However, the diameter of the torque pins 22 within the fitting holes 14 may differ from the diameter of the torque pins 22 within the first through holes 24, i.e., the outer diameter of the torque pins 22 may differ within the fitting holes 14 and the first through holes 24. In case the outer diameter of the torque pins 22 differs within the fitting holes 14 and the first through holes 24, the rolling without sliding of the torque pins 22 relative to both the external gear 12 and the carrier 2 cannot be ensured even if the relationship distance $d_1$ = distance $d_2$ is satisfied. However, even in this case, the torque pins 22 can roll relative to both the external gear 12 and the carrier 2. Consequently, the torque pins 22 function as the equivalent of rolling bearings relative to both the external gear 12 and the carrier 2.

Conversely, in case the outer diameter of the torque pins 22 differs within the fitting holes 14 and within the first through holes 24, the ability of the torque pins 22 to roll without sliding relative to both the external gear 12 and the carrier 2 may be geometrically ensured even if distance $d_1$ and distance $d_2$ differ. As described above, if the ratio of the diameter $R_1$ of the fitting holes 14 to the diameter ($R_1 - d_1$) of the torque pins 22 within the fitting holes 14 is equal to the ratio of the diameter $R_2$ of the first through holes 24 to the diameter ($R_2 - d_2$) of the torque pins 22 within the first through holes 24, the ability of the torque pins to roll without sliding relative to both the external gear 12 and the carrier 2 is geometrically ensured. However, in this case, the sum of distance $d_1$ and distance $d_2$ need to be equal to twice the

offset distance $d_3$ between the axis 34 of the external gear 12 and the axis 32 of the internal gear 42. Consequently, simultaneously satisfying both formula 1 and formula 2 below is a condition for the torque pins 22 to be able to roll without sliding relative to both the external gear 12 and the carrier 2.

$$R_1/(R_1 - d_1) = R_2/(R_2 - d_2) \qquad \text{(formula 1)}$$

$$d_1 + d_2 = 2 \times d_3 \qquad \text{(formula 2)}$$

In the case of the gear transmission 100, the diameter of the torque pins 22 within the fitting holes 14 is equal to the diameter of the torque pins 22 within the first through holes 24. That is, $(R_1 - d_1)$ and $(R_2 - d_2)$ are equal. Consequently, if distance $d_1$ and distance $d_2$ are equal, diameter $R_1$ and diameter $R_2$ are equal. The gear transmission 100 simultaneously satisfies formula 1 and formula 2 above.

Other features of the gear transmission 100 will be described. As shown in Fig. 1 and Fig. 2, a center through hole 26 is formed in each of the torque pins 22, this center through hole 26 extending along the axis of the torque pin 22. The weight of the torque pins 22 can be reduced by forming the center through holes 26. The inertial force of the torque pins 22 can be reduced. Further, a thickness of the torque pins 22 is ensured such that the torque pins 22 are not deformed by the torque transmitted from the external gear 12 to the carrier 2. In case the torque to be transmitted is large, the torque pins 22 may be solid.

The fitting holes 14 are formed in both the carrier upper plate 2a and the carrier lower plate 2c. Consequently, the torque pins 22 make contact with the fitting holes 14 at both sides of the torque pins 22 in the direction of the axis 32. The rotational torque of the external gear 12 can be transmitted in a well-balanced manner to both the carrier upper plate 2a and the carrier lower plate 2c. Further, the external gear 12 is disposed at approximately a central portion in the axial direction of the torque pins 22. Consequently, the rotational torque of the external gear 12 can be transmitted in a well-balanced manner to the torque pins 22.

As shown in Fig. 1, the external gear 12 comprises the thin portion 12a and the thick portion 12b. The thick portion 12b is formed outside the thin portion 12a. In other words, the portion of the external gear 12 that meshes with the internal gear 42 is formed so as to be thick. The meshing of the external gear 12 and the internal gear 42 can be strengthened.

A carrier through hole 5 is formed in the center of the carrier 2, and a crankshaft through hole 9 is formed in the center of the crankshaft 8. The carrier through hole 5 and the crankshaft through hole 9 communicate. Wiring, a shaft, etc. can be passed through the through holes 5, 9. Further, when wiring, a shaft, etc. is not passed through the through holes 5, 9 in the gear transmission 100, a seal cap 6 is affixed to the carrier through hole 5. Further, the fitting holes 14 of the carrier 2 extend, in the direction of the axis 32, until both end portions of the carrier 2. Consequently, after the carrier upper plate 2a and the carrier lower plate 2c have been affixed, the torque pins 22 can be inserted into the fitting holes 14. Manufacture of the gear transmission 100 can be simplified.

A seal cap 16 is affixed to each of the fitting holes 14 of the carrier upper plate 2a and the carrier lower plate 2c. Further, an oil seal 44 is disposed between the case 42 and the carrier 2. The seal caps 6, 16 and the oil seal 44 can prevent lubricant that has been filled into the gear transmission 100 from leaking to the exterior of the gear transmission 100.

As described above, if formula 1 and formula 2 are satisfied, the torque pins 22 can function as the equivalent of rolling bearings relative to both the fitting holes 14 and the first through holes 24. However, satisfying formula 1 and formula 2 does not ensure that the torque pins 22 do not actually slide relative to either the fitting holes 14 or the first through holes 24. In normal rolling bearings, as well, a rolling element may be accompanied by sliding. Even if sliding can occur between the rolling element and an outer ring, or between the rolling element and an inner ring, a gap required for a rolling bearing can be planned to be smaller than a gap required for a sliding bearing.

Further, in case at least one of formula 1 and formula 2 is not satisfied, the torque pins 22 slide while rolling relative to at least one of the fitting holes 14 and the first through holes 24. The sliding distance between at least one of the torque pins 22 and the carrier 2 or the torque pins 22 and the external gear 12 can be shortened by the extent to which the torque pins 22 roll. Consequently, even in a gear transmission in which at least one of formula 1 and formula 2 is not satisfied, the torque pins 22 can make the clearance between the carrier 2 and the external gear 12 smaller than in a conventional gear transmission in which ring members are fitted onto torque pins affixed to a carrier.

(Second Embodiment)

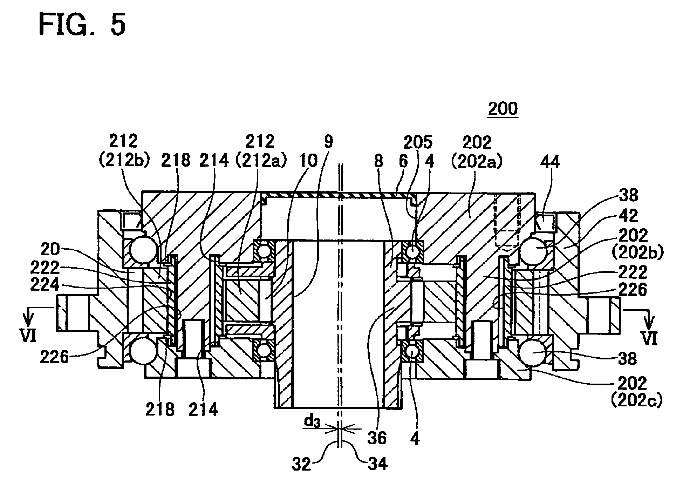

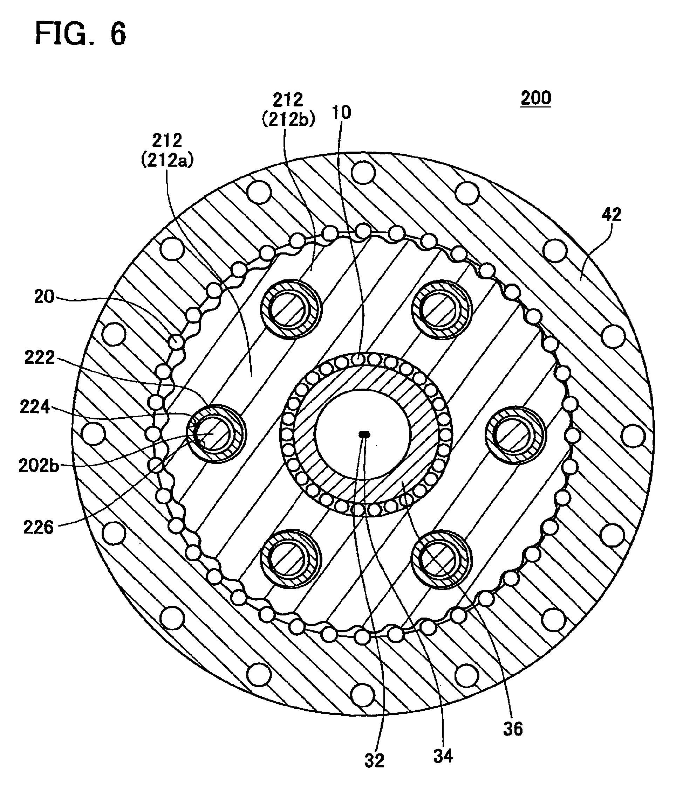

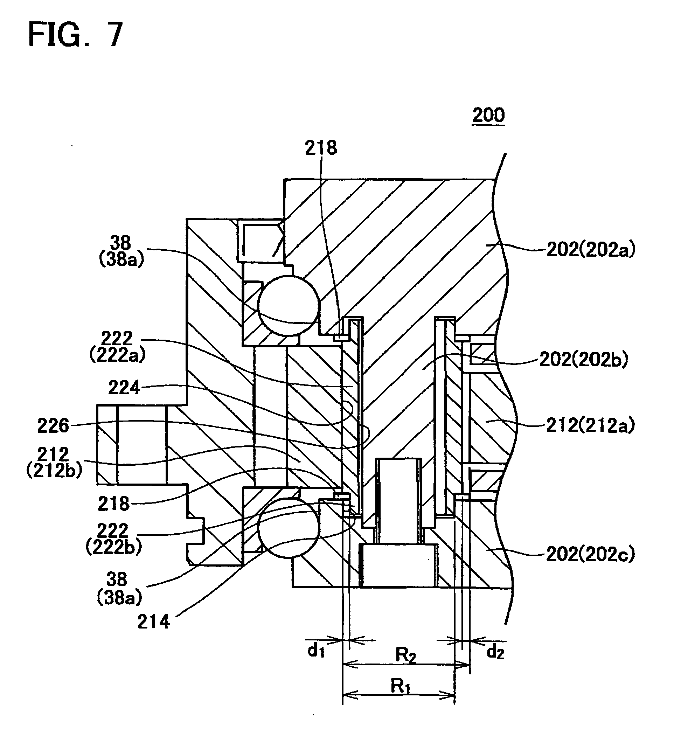

A gear transmission 200 will be described with reference to Fig. 5 to Fig. 7. Fig. 5 shows a cross-sectional view of essential parts of the gear transmission 200. Fig. 6 shows a cross-sectional view along line VI-VI of Fig. 5. Fig. 7 shows a partial enlarged view of the surroundings of torque pins 222 in Fig. 5. The gear transmission 200 is a modified example of the gear transmission 100; parts that are the same as those of the gear transmission 100 have the same reference numbers or the same two lower digits appended thereto and an explanation thereof may be omitted.

As shown in Fig. 5 and Fig. 6, a carrier pin 202b passes through a center through hole 226 of each of the torque pins 222. Consequently, it is not necessary to form the second through holes 40 (see Fig. 2) in the external gear 12 so that the carrier pins 202b pass through the external gear 12. In other words, the center through holes 226 of the torque pins 222 also function as second through holes for the carrier pins 202b. Further, the number of torque pins 222 of the gear transmission 200 is equal to the number of torque pins 22 of the gear transmission 100. The number of carrier pins 202b of the gear transmission 200 is equal to the number of carrier pins of the gear transmission 100. In the gear transmission 200, the number of through holes formed in an external gear 212 can be reduced without reducing the number of torque pins 222 and carrier pins 202b. Consequently, processing of the external gear 212 can be made easier. Further, since the number of through holes formed in the external gear 212 is reduced, reduction in the strength of the external gear 212 can be prevented. Consequently, in the gear transmission 200, the strength of the external gear can be increased while maintaining the strength of the carrier. Further, the carrier pins 202b do not make contact with the inner circumference of the center through holes 226. Consequently, the carrier pins 202b do not interfere with the rotation of the torque pins 222 (the rolling of the torque pins 222 relative to first through holes 224 and fitting holes 214).

As shown in Fig. 7, the torque pins 222 each have a large diameter portion 222a and a small diameter portion 222b. The large diameter portions 222a make contact with the first through holes 224 of the external gear 212. The small diameter portions 222b make contact with the fitting holes 214 of a carrier 202. As is clear from Fig. 7, diameter $R_1$ of the fitting holes 214 is smaller than diameter $R_2$ of the first through holes 224. Consequently, the offset distance between the axis 32 and the torque pins 222 can be enlarged by the amount of difference between diameter $R_2$ and diameter $R_1$ without shortening the distance between the fitting holes 214 and an inner race 38a of the angular ball bearings 38. In other words, in the gear transmission 200, the torque pins 222 can be disposed further to the outside in the radial direction of the gear transmission 200 than the position of the torque pins 22 in the gear transmission 100. Consequently, the diameter of a carrier through hole 205 of the carrier 202 (see Fig. 5) can be enlarged. Further, the strength of the carrier 202 may undesirably be reduced if the distance between the inner race 38a and the fitting holes 214 is shortened. Similarly, the strength of the carrier 202 may undesirably be reduced if the distance between the carrier through hole 205 and the fitting holes 214 is shortened.

In the gear transmission 200, the ratio of the diameter $R_1$ of the fitting holes 214 to the diameter ($R_1$ - $d_1$) of the small diameter portions 222b of the torque pins 222 is equal to the ratio of the diameter $R_2$ of the first through holes 224 to the diameter ($R_2$ - $d_2$) of the large diameter portions 222a of the torque pins 222. Further, the sum of distance $d_1$ and distance $d_2$ is equal to twice the offset distance $d_3$ between the axis 34 of the external gear 212 and the axis 32 of the internal gear 42. Consequently, the gear transmission 200 simultaneously satisfies both formula 1 and formula 2 above. The ability of the torque pins 222 to roll without sliding relative to both the external gear 212 and the carrier 202 is geometrically ensured.

In the gear transmission 200, the fitting holes 214 of a carrier upper plate 202a do not pass through the carrier upper plate 202a in the direction of the axis 32. Similarly, the fitting holes 214 of a carrier lower plate 202c also do not pass through the carrier lower plate 202c in the direction of the axis 32. Consequently, each of the fitting holes 214 has a bottom surface. Since movement of the torque pins 222 in the direction of the axis 32 is restricted by washers 218, a gap is present between the torque pins 222 and the fitting holes 214. Since the torque pins 222 do not make contact with the bottom surface of the fitting holes 214, finishing of the bottom surface of the fitting holes 214 can be made simpler.

(Third Embodiment)

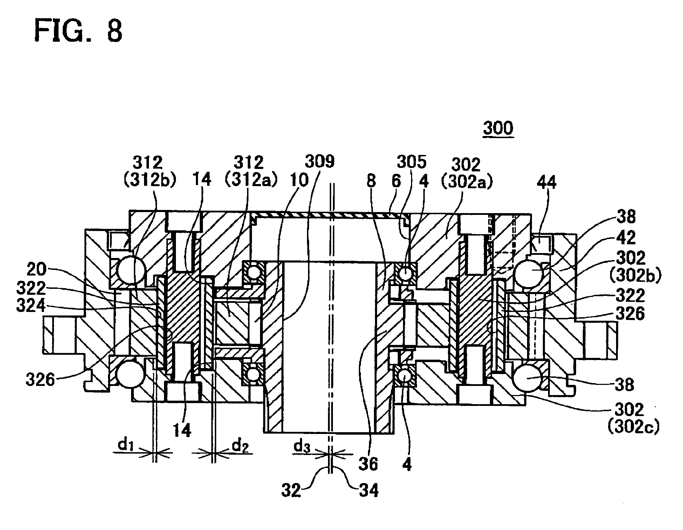

A gear transmission 300 will be described with reference to Fig. 8. The gear transmission 300 is a modified example of the gear transmissions 100 and 200. Parts that are substantially the same as those of the gear transmissions 100 and 200 have the same reference numbers or the same two lower digits appended thereto and an explanation thereof may be omitted.

In the gear transmission 300, carrier pins 302b are not integrally formed with a carrier upper plate 302a. The carrier pins 302b are affixed by a bolt to both the carrier upper plate 302a and a carrier lower plate 302c. Consequently, in the gear transmission 300, the shape of the carrier upper plate 302a can be simplified. The manufacturing cost of the carrier upper plate 302a can be reduced. In the gear transmission 300, the outer diameter of torque pins 322 is constant in the direction of the axis 32. As in the case of the gear transmission 100, the diameter of the fitting holes 14 in the gear transmission 300 is equal to the diameter of first through holes 324. Further, the relationship distance $d_1$ = distance $d_2$

is satisfied. Consequently, in the gear transmission 300 as well, the ability of the torque pins 322 to roll without sliding relative to both an external gear 312 and a carrier 302 is geometrically ensured. Further, as in the case of the gear transmission 200, a large diameter portion and a small diameter portion may be formed on the torque pins 322.

(Fourth Embodiment)

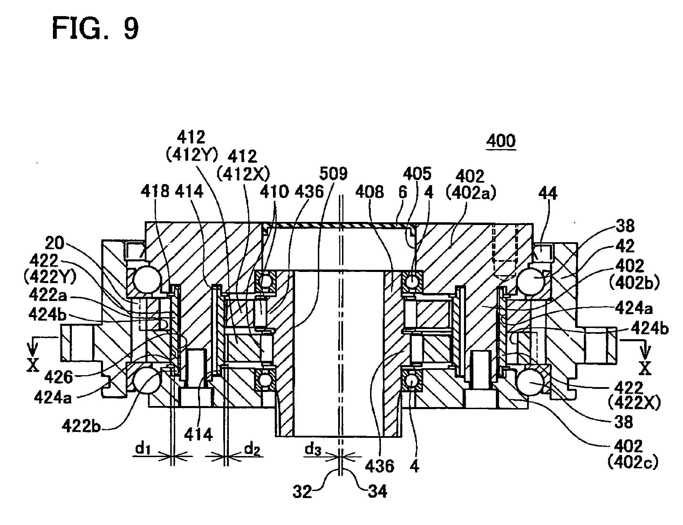

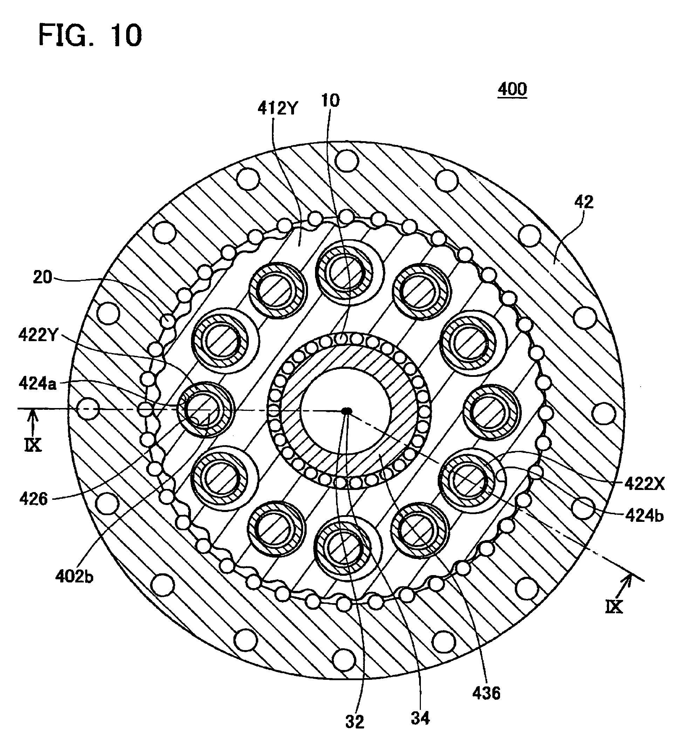

A gear transmission 400 will be described with reference to Fig. 9 and Fig. 10. Fig. 10 shows a cross-sectional view along line X-X of Fig. 9. Fig. 9 corresponds to a cross-section along line IX-IX of Fig. 10. The gear transmission 400 is a modified example of the gear transmission 200; parts that are the same as those of the gear transmission 200 have the same reference numbers or the same two lower digits appended thereto and an explanation thereof may be omitted.

As shown in Fig. 9, the gear transmission 400 has a feature of comprising two external gears 412 (412X, 412Y). The thickness of the two external gears 412 is constant along the radial direction. Consequently, manufacturing of the external gear 412 can be simplified. The external gear 412X and the external gear 412Y are symmetrical in an eccentric direction relative to the axis 32. Further, the axis 34 of Fig. 9 indicates the axis of the external gear 412Y. As shown in Fig. 10, first through holes 424a and third through holes 424b are formed in the external gear 412Y. The diameter of the first through holes 424a is smaller than the diameter of the third through holes 424b. As shown in Fig. 9, torque pins 422Y inserted into the first through holes 424a of the external gear 412Y are inserted into the third through holes 424b of the external gear 412X. Further, torque pins 422X inserted into the third through holes 424b of the external gear 412Y are inserted into the first through holes 424a of the external gear 412X. Consequently, the rotational torque of the external gear 412X is not transmitted to the torque pins 422Y, and only the rotational torque of the external gear 412Y is transmitted to the torque pins 422Y. Similarly, the rotational torque of the external gear 412Y is not transmitted to the torque pins 422X, and only the rotational torque of the external gear 412X is transmitted to the torque pins 422X.

(Fifth Embodiment)

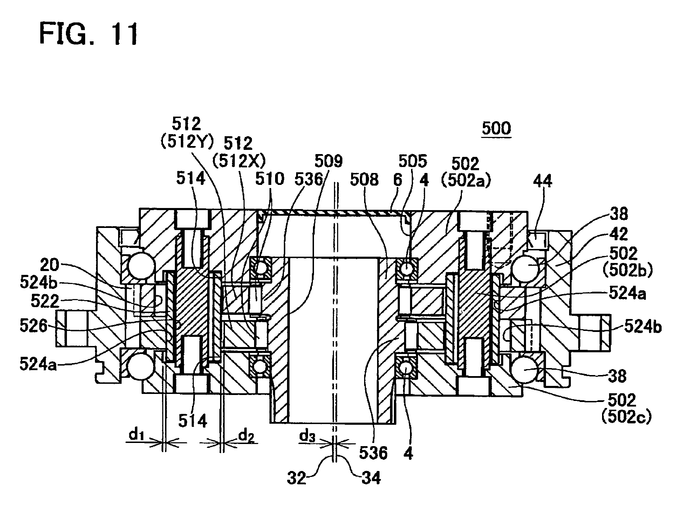

A gear transmission 500 will be described with reference to Fig. 11. The gear transmission 500 is a modified example of the gear transmission 400; parts that are the same as those of the gear transmission 400 have the same reference numbers or the same two lower digits appended thereto and an explanation thereof may be omitted.

In the gear transmission 500, carrier pins 502b are not integrally formed with a carrier upper plate 502a. Consequently, as in the case of the gear transmission 300, in the gear transmission 500, the shape of the carrier upper plate 502a can be simplified. Further, as in the case of the gear transmission 200, a large diameter portion and a small diameter portion may be formed on torque pins 522.

(Sixth Embodiment)

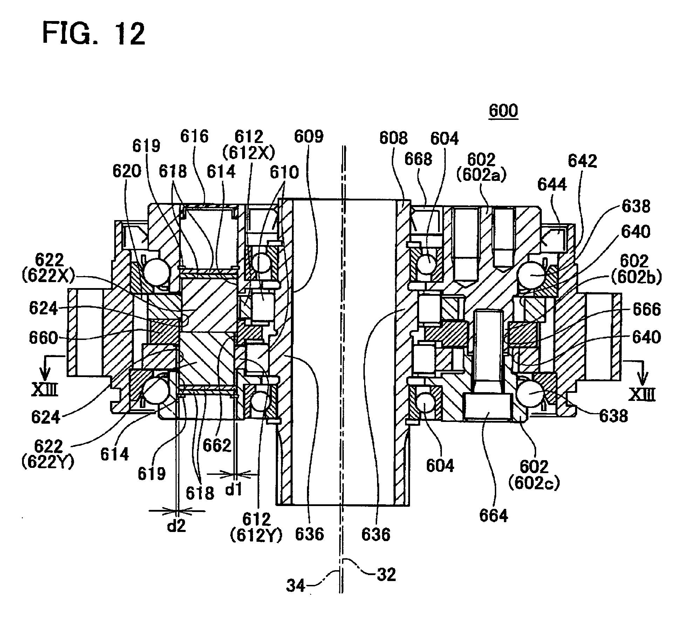

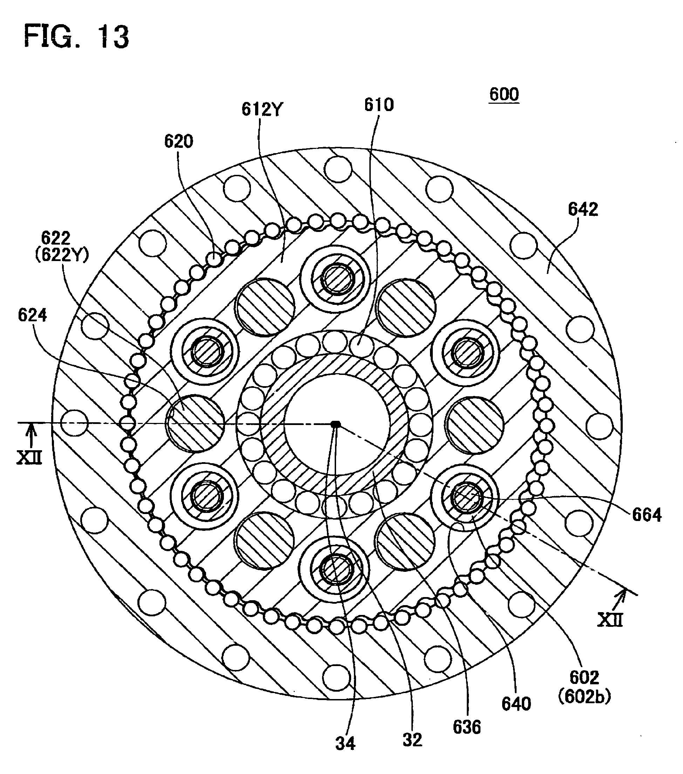

A gear transmission 600 will be described with reference to Fig. 12 and Fig. 13. Fig. 13 shows a cross-sectional view along line XIII-XIII of Fig. 12. Fig. 12 corresponds to a cross-section along line XII-XII of Fig. 13. The gear transmission 600 is a modified example of the gear transmissions 100 and 400; parts that are the same as those of the gear transmissions 100 and 400 have the same reference numbers or the same two lower digits appended thereto and an explanation thereof may be omitted.

As shown in Fig. 12, the gear transmission 600 has a carrier intermediate plate 660 between an external gear 612X and an external gear 612Y. Fourth through holes 666 are formed in the carrier intermediate plate 660. Carrier pins 602b fit into the fourth through holes 666. That is, the carrier intermediate plate 660 is integrated with a carrier upper plate 602a by pressing the carrier pins 602b into the fourth through holes 666. A carrier lower plate 602c is affixed by bolts 664 to the carrier pins 602b. Consequently, a carrier 602 can also be said that the carrier 602 is configured by the carrier upper plate 602a, the carrier lower plate 602c, the carrier pins 602b and the carrier intermediate plate 660. Fifth through holes 662 are also formed in the carrier intermediate plate 660. Torque pins 622X and torque pins 622Y freely fit into the fifth through holes 662. The diameter of the fifth through holes 662 is equal to the diameter of fitting holes 614. When viewed the gear transmission 600 in the direction of the axis 32, the fifth through holes 662 correspond with the fitting holes 614. Consequently, the fifth through holes 662 can also be called fitting holes of the carrier 602. Further, the diameter of the fifth through holes 662 and the fitting holes 614 is equal to the diameter of first through holes 624 formed in the external gear 622.

As shown in Fig. 13, a plurality of first through holes 624 and a plurality of second through holes 640 are alternately formed along the circumferential direction of the external gear 612Y. The torque pins 622Y freely fit into the first through holes 624 of the external gear 612Y. The carrier pins 602b freely fit into the second through holes 640 of the external gear 612Y. Further, in the external gear 612X, also, a plurality of the first through holes 624 and a plurality of the second through holes 640 are alternately formed along the circumferential direction of the external gear 612X.

As described above, the torque pins 622Y freely fit into the fitting holes 614, the fifth through holes 662 and the first through holes 624. One side of the torque pins 622Y, in the radial direction of the torque pins 622Y, makes contact with the inner circumference of both the fitting holes 614 and the fifth through holes 662. Further, the other side of the torque pins 622Y, in the radial direction of the torque pins 622Y, makes contact with the inner circumference of the first through holes 624 of the external gear 612Y. The inner circumference of the first through holes 624 makes contact with the torque pins 622Y at an approximately central portion in the axial direction of the torque pins 622Y. Similarly, with the torque pins 622X, the inner circumference of the first through holes 624 of the external gear 612X makes contact with the torque pins 622X at an approximately central portion in the axial direction of the torque pins 622X.

In the gear transmission 600, the fitting holes 614 and the fifth through holes 662 make contact with both end portions of the torque pins 622 in the axial direction of the torque pins 622, and the first through holes 624 make contact with the central portion of the torque pins 622 in the axial direction of the torque pins 622. The contact points are disposed at opposite sides of the torque pins 622 in the radial direction of the torque pins 622. Consequently, during operation of the gear transmission 600, the axes of the torque pins 622 do not become misaligned. Further, in the gear transmission 600, distance $d_1$ is equal to distance $d_2$. The diameter of the fitting holes 614 and the fifth through holes 662 is equal to the diameter of the first through holes 624. Furthermore, the outer diameter of the torque pins 622 is constant. Consequently, the gear transmission 600 also simultaneously satisfies formula 1 and formula 2 above.

Other features of the gear transmission 600 will be described. In the gear transmission 600, a seal cap. etc. is not provided on a crankshaft through hole 609 in the direction of the axis 32. Consequently, wiring, a shaft, etc, can be passed through the crankshaft through hole 609. Further, since an oil seal 668 is provided between a crankshaft 608 and the carrier 602, lubricant can be prevented from leaking from between the two to the exterior of the gear transmission 600.

As in the case of the gear transmission 100, the fitting holes 614 of the carrier 602 extend, in the direction of the axis 32, until both end portions of the carrier 602. The fitting holes 614 can easily be formed in the carrier 602. Further, after the carrier upper plate 602a, the carrier intermediate plate 660 and the carrier lower plate 602c have been affixed, the torque pins 622 can be inserted into the fitting holes 614.

The torque pins 622 are solid. Consequently, the torque pins 622 do not deform even if the torque transmitted from the external gear 612 to the carrier 602 is large. Furthermore, stopping members 618 are provided in a double layer at each of the fitting holes 614 of the carrier upper plate 602a and the fitting holes 614 of the carrier lower plate 602c, the stopping members 618 restricting the movement of the torque pins 622 in the direction of the axis 32. While rotating, the torque pins 662 eccentrically rotate relative to the fitting holes 14. That is, the torque pins 622 revolve and rotate. Consequently, the stopping members 618 also rotate together with the rotation of the torque pins 622. In case only one stopping member 618 is provided, slipping occurs between the stopping member 618 and the retaining ring 619. In this case, since the contact area of the stopping member 618 and the retaining ring 619 is small, in other words, since a large surface pressure is applied to the stopping member 618 from the retaining ring 619, the stopping member 618 may rapidly become abraded. As the stopping member 618 becomes more abraded, the stopping member 618 may be damaged. When a double layer of stopping members 618 is provided, as in the present embodiment, even if the stopping members 618 rotate with which the torque pins 622 are making contact, slipping occurs between the two stopping members 618. Since the contact area between the stopping members 618 is large, the surface pressure applied between the two can be made small. Consequently, an oil film is formed between the stopping members 618, and the abrasion of the stopping members 618 can be prevented.

As described above, the carrier intermediate plate 660 is disposed between the external gear 612X and the external gear 612Y. Consequently, inner pins 620 can be prevented from falling inward in the radial direction of the gear transmission 600. In particular, in case the difference in the number of teeth of the internal gear (the number of inner pins) and the number of teeth of the external gear is two or more, it is necessary to provide a stopping member (e.g., a ring pressing the inner pins from an inside of the case, etc.) that prevents the inner pins from falling inward in the radial direction. By disposing the carrier intermediate plate 660 between the external gear 612X and the external gear 612Y, a member to prevent the inner pins from falling can be omitted.

In the above embodiments, a center crank-type gear transmission was described. The features of the present invention can also be applied to a gear transmission other than a center crank-type. Consequently, the features of the present invention can be applied to a type of gear transmission that comprises a crankshaft extending alongside the axis of the carrier at a position offset from the axis of the carrier, and that is rotatably supported by the carrier.

Specific examples of the present invention are described above in detail, but these examples are merely illustrative and place no limitation on the scope of the patent claims. The technology described in the patent claims also encompasses various changes and modifications to the specific examples described above. The technical elements explained in the present specification or drawings provide technical utility either independently or through various combinations. The present invention is defined by the claims. Further, the purpose of the examples illustrated by the present specification or drawings is to satisfy multiple objectives simultaneously, and satisfying any one of those objectives gives technical utility to the present invention.

**Claims**

1. A gear transmission (100,200,300,400,500,600) comprising:

   an internal gear (42,642);
   a carrier (2,202,302,402,502,602) coaxially supported on the internal gear(42,642) and provided with a fitting hole (14,214,414,514,614) which extends alongside an axis (32) of the internal gear (42,642);
   an external gear (12,212,312,412,512,612) rotatably supported on the carrier (2,202,302,402,502,602) to eccentrically rotate, the external gear (12,212,312,412,512,612) eccentrically rotates while meshing with the internal gear (42,642) and is provided with a through hole (24,224,324,424,524,624) which overlaps a portion of the fitting hole (14,214,414,514,614); and
   a torque pin (22,222,322,422,522,622) which freely fits into the fitting hole (14,214,414,514,614) and the through hole (24,224,324,424,524,624),

   **characterized in**:

   the fitting hole (14,214.414,514,614) and the through hole (24,224,324,424,524,624) satisfy the following formulas (1) and (2):

   $$R_1/(R_1 - d_1) = R_2/(R_2 - d_2) \qquad (1)$$

   $$d_1 + d_2 = 2 \times d_3 \qquad (2)$$

   where $R_1$ is a diameter of the fitting hole (14,214,414,514,614), $d_1$ is a maximum length of a gap between an inner circumference of the fitting hole 04,214,414,514,614) and the torque pin (22,222,322,422,522,622), $R_2$ is a diameter of the through hole, $d_2$ is a maximum length of a gap between an inner circumference of the through hole (24,224,324,424,524,624) and the torque pin (22,222,322,422,522,622), and $d_3$ is an offset amount from an axis (32) of the carrier (2,202,302,402,502,602) to a center (34) of the external gear (12,212,312,412,512,612).

2. The gear transmission (100,200,300,400,500) according to claim , wherein a through hole (26,226,326,426,526) is formed in the torque pin (22,222,322,422,522), and the through hole (26,226,326,426,526) extends along the axis of the torque pin (22,222,322,422,522).

3. The gear transmission (200,300,400,500) according to claim 2, wherein
   the carrier (202,302,402,502) includes a pair of opposing plates (202a-202c, 302a-302c, 402a-402c, 502a-502c) and a carrier pin (202b, 302b, 402b, 502b) that joins the two plates (202a-202c, 302a-302c, 402a-402c, 502a-502c); and
   the carrier pin (202b, 302b, 402b, 502b) passes through the through hole (226,326,426,526) of the torque pin (222,322,422,522).

4. The gear transmission (200,400) according to claim 2 or 3, wherein
   the carrier (202,402) includes a carrier upper plate (202a,402a), a carrier lower plate (202c,402c) and a carrier pin (202b,402b);
   the carrier pin (202b,402b) is integrally formed with the carrier upper plate (202a,402a), and
   the carrier pin (202b, 402b) passes through the through hole (226,326,426,526) of the torque pin (222,322,422,522).

5. The gear transmission (200,400) according to any one of claims 2 to 4, wherein
   the torque pin (222,422) further includes a large diameter portion (222a,422a) and a small diameter portion (222b, 422b);
   the large diameter portion (222a,422a) makes contact with the through hole (224,424) of the external gear (212, 412), and the small diameter portion (222b,422b) makes contact with the fitting hole (214,414) of the carrier (202,402).

6. The gear transmission (100,200,300) according to claim 1 or 2, wherein:

the external gear (12,212,312) comprises a thin portion (12a, 212a,312a) and a thick portion (12b,212b,312b), the thick portion (12b,212b,312b) is positioned at the outside in the radial direction of the torque pin (22,222,322); and

the thick portion (12b,212b,312b) meshes with the internal gear (42).

7. The gear transmission (600) according to claim 1, wherein
the stopping member (618) which restricts the movement of the torque pin (622) in the direction of the axis (32) is provided in a double layer at each side of the torque pin (622) in the direction of the axis (32).

8. The gear transmission (600) according to claim 1 or 7, wherein
the external gear (612) includes a first external gear (612X) and a second external gear (612Y), wherein the first external gear (612X) and the second external gear (612Y) are symmetrical in an eccentric direction relative to the axis (32) of the internal gear (642);
the carrier (602) includes a carrier upper plate (602a), a carrier lower plate (602c), a carrier pin (602b) which joinsthe carrier upper plate (602a) and the carrier lower plate (602c), and a carrier intermediate plate (660) provideded between the external gear (612X) and the external gear (612Y);
the torque pin (622) includes a first torque pin (622X) and a second torque pin (622Y), wherein
the first torque pin (622X) freely fits into a fitting hole (614) of the carrier upper plate (602a), a through hole (624) of the external gear (612X) and a fitting hole (662) of the carrier intermediate plate (660), and
the second torque pin (622Y) freely fits into a fitting hole (614) of the carrier lower plate (602c), a through hole (624) of the external gear (612Y) and the fitting hole (662) of the carrier intermediate plate (660).

9. The gear transmission (600) according to claim 8, wherein
the carrier pins (602b) are integrally formed with the carrier upper plate 602a);
the carrier intermediate plate (660) is affixed to the carrier pins (602b) by press-fitting.

**Patentansprüche**

1. Getriebe (100, 200, 300, 400, 500, 600) mit:

einem Innenrad (42, 642);
einem Träger (2, 202, 302, 402, 502, 602), der koaxial am Innenrad (42, 642) gehalten wird und mit einem Passloch (14, 214, 414, 514, 614) versehen ist, das sich längs einer Achse (32) des Innenrads (42, 642) erstreckt;
einem Außenrad (12, 212, 312, 412, 512, 612), das drehbar am Träger (2, 202, 302, 402, 502, 602) gehalten wird, um sich exzentrisch zu drehen, wobei sich das Außenrad (12, 212, 312, 412, 512, 612) exzentrisch dreht, während es mit dem Innenrad (42, 642) in Eingriff steht, und mit einer Durchgangsbohrung (24, 224, 324, 424, 524, 624) versehen ist, die sich mit einem Abschnitt des Passlochs (14, 214, 414, 514, 614) überlappt; und
einem Drehmomentstift (22, 222, 322, 422, 522, 622), der frei in das Passloch (14, 214, 414, 514, 614) und die Durchgangsbohrung (24, 224, 324, 424, 524, 624) eingepasst ist,

**dadurch gekennzeichnet, dass**:

das Passloch (14, 214, 414, 514, 614) und die Durchgangsbohrung (24, 224, 324, 424, 524, 624) die folgenden Formeln (1) und (2) erfüllen:

$$R_1 / (R_1 - d_1) = R_2 / (R_2 - d_2) \quad (1)$$

$$d_1 + d_2 = 2 \times d_3 \quad (2)$$

wobei $R_1$ ein Durchmesser des Passlochs (14, 214, 414, 514, 614) ist, $d_1$ eine maximale Länge eines Spalts zwischen einem Innenumfang des Passlochs (14, 214, 414, 514, 614) und dem Drehmomentstift (22, 222, 322, 422, 522, 622) ist, $R_2$ ein Durchmesser der Durchgangsbohrung ist, $d_2$ eine maximale Länge eines Spalts zwischen einem Innenumfang der Durchgangsbohrung (24, 224, 324, 424, 524, 624) und dem Drehmomentstift (22, 222, 322, 422, 522, 622) ist, und $d_3$ ein Versatzbetrag von einer Achse (32) des Trägers (2, 202, 302, 402, 502, 602) zu einer Mitte (34) des Außenrads (12, 212, 312, 412, 512, 612) ist.

2. Getriebe (100, 200, 300, 400, 500) nach Anspruch 1, wobei eine Durchgangsbohrung (26, 226, 326, 426, 526) im Drehmomentstift (22, 222, 322, 422, 522) ausgebildet ist und sich die Durchgangsbohrung (26, 226, 326, 426, 526) längs der Achse des Drehmomentstifts (22, 222, 322, 422, 522) erstreckt.

3. Getriebe (200, 300, 400, 500) nach Anspruch 2, wobei
der Träger (202, 302, 402, 502) ein Paar gegenüberliegender Platten (202a-202c, 302a-302c, 402a-402c, 502a-502c) und einen Trägerstift (202b, 302b, 402b, 502b) aufweist, der die beiden Platten (202a-202c, 302a-302c, 402a-402c, 502a-502c) verbindet; und
der Trägerstift (202b, 302b, 402b, 502b) durch die Durchgangsbohrung (226, 326, 426, 526) des Drehmomentstifts (222, 322, 422, 522) geht.

4. Getriebe (200, 400) nach Anspruch 2 oder 3, wobei
der Träger (202, 402) eine obere Trägerplatte (202a, 402a), eine untere Trägerplatte (202c, 402c) und einen Trägerstift (202b, 402b) aufweist;
der Trägerstift (202b, 402b) integral mit der oberen Trägerplatte (202a, 402a) ausgebildet ist, und
der Trägerstift (202b, 402b) durch die Durchgangsbohrung (226, 326, 426, 526) des Drehmomentstifts (222, 322, 422, 522) geht.

5. Getriebe (200, 400) nach einem der Ansprüche 2 bis 4, wobei der Drehmomentstift (222, 422) ferner einen Abschnitt (222a, 422a) mit großem Durchmesser und einen Abschnitt (222b, 422b) mit kleinem Durchmesser aufweist;
der Abschnitt (222a, 422a) mit großem Durchmesser mit der Durchgangsbohrung (224, 424) des Außenrads (212, 412) Kontakt aufnimmt, und der Abschnitt (222b, 422b) mit kleinem Durchmesser mit dem Passloch (214, 414) des Trägers (202, 402) Kontakt aufnimmt.

6. Getriebe (100, 200, 300) nach Anspruch 1 oder 2, wobei:

das Außenrad (12, 212, 312) einen dünnen Abschnitt (12a, 212a, 312a) und einen dicken Abschnitt (12b, 212b, 312b) aufweist, der dicke Abschnitt (12b, 212b, 312b) in die radiale Richtung des Drehmomentstifts (22, 222, 322) an der Außenseite angeordnet ist; und
der dicke Abschnitt (12b, 212b, 312b) mit dem Innenrad (42) in Eingriff steht.

7. Getriebe (600) nach Anspruch 1, wobei
das Sperrelement (618), das die Bewegung des Drehmomentstifts (622) in die Richtung der Achse (32) einschränkt, in einer Doppelschicht auf jeder Seite des Drehmomentstifts (622) in die Richtung der Achse (32) vorgesehen ist.

8. Getriebe (600) nach Anspruch 1 oder 7, wobei
das Außenrad (612) ein erstes Außenrad (612X) und ein zweites Außenrad (612Y) aufweist, wobei das erste Außenrad (612X) und das zweite Außenrad (612Y) in eine exzentrische Richtung relativ zur Achse (32) des Innenrads (642) symmetrisch sind;
der Träger (602) eine obere Trägerplatte (602a), eine untere Trägerplatte (602c), einen Trägerstift (602b), der die obere Trägerplatte (602a) und die untere Trägerplatte (602c) verbindet, und eine Trägerzwischenplatte (660) aufweist, die zwischen dem Außenrad (612X) und dem Außenrad (612Y) vorgesehen ist;
der Drehmomentstift (622) einen ersten Drehmomentstift (622X) und einen zweiten Drehmomentstift (622Y) aufweist, wobei
der erste Drehmomentstift (622X) in ein Passloch (614) der oberen Trägerplatte (602a), eine Durchgangsbohrung (624) des Außenrads (612X) und ein Passloch (662) der Trägerzwischenplatte (660) frei eingepasst ist, und
der zweite Drehmomentstift (622Y) in ein Passloch (614) der unteren Trägerplatte (602c), eine Durchgangsbohrung (624) des Außenrads (612Y) und das Passloch (662) der Trägerzwischenplatte (660) frei eingepasst ist.

9. Getriebe (600) nach Anspruch 8, wobei
die Trägerstifte (602b) integral mit der oberen Trägerplatte (602a) ausgebildet sind;
die Trägerzwischenplatte (660) an den Trägerstiften (602b) durch Einpressen befestigt ist.

**Revendications**

1. Transmission à engrenage (100, 200, 300, 400, 500, 600), comprenant :

   un engrenage interne (42, 642) ;
   un support (2, 202, 302, 402, 502, 602) monté coaxialement sur l'engrenage interne (42, 642) et prévu avec un alésage d'ajustement (14, 214, 414, 514, 614) qui s'étend le long d'un axe (32) de l'engrenage interne (42, 642) ;
   un engrenage externe (12, 212, 312, 412, 512, 612) monté de manière rotative sur le support (2, 202, 302, 402, 502, 602) pour être entraîné en rotation excentrique, ledit engrenage externe (12, 212, 312, 412, 512, 612) étant entraîné en rotation excentrique par engrènement avec l'engrenage interne (42, 642) et étant pourvu d'un alésage traversant (24, 224, 324, 424, 524, 624) qui chevauche une partie de l'alésage d'ajustement (14, 214, 414, 514, 614) ; et
   une tige de transmission (22, 222, 322, 422, 522, 622) qui s'engage librement dans l'alésage d'ajustement (14, 214, 414, 514, 614) et l'alésage traversant (24, 224, 324, 424, 524, 624),

   **caractérisé en ce que** :

   l'alésage d'ajustement (14, 214, 414, 514, 614) et l'alésage traversant (24, 224, 324, 424, 524, 624) satisfont aux formules (1) et (2) suivantes :

$$R_1 / (R_1 - d_1) = R_2 / (R_2 - d_2) \qquad (1)$$

$$d_1 + d_2 = 2 \times d_3 \qquad (2)$$

   où $R_1$ est un diamètre de l'alésage d'ajustement (14, 214, 414, 514, 614), $d_1$ est une longueur maximale d'un interstice entre une circonférence intérieure de l'alésage d'ajustement (14, 214, 414, 514, 614) et la tige de transmission (22, 222, 322, 422, 522, 622), $R_2$ est un diamètre de l'alésage traversant (24, 224, 324, 424, 524, 624), $d_2$ est une longueur maximale d'un interstice entre une circonférence intérieure de l'alésage traversant (24, 224, 324, 424, 524, 624) et la tige de transmission (22, 222, 322, 422, 522, 622), et $d_3$ est une valeur de décalage d'un axe (32) du support (2, 202, 302, 402, 502, 602) par rapport à un centre (34) de l'engrenage externe (12, 212, 312, 412, 512, 612).

2. Transmission à engrenage (100, 200, 300, 400, 500) selon la revendication 1, où un alésage traversant (26, 226, 326, 426, 526) est formé sur la tige de transmission (22, 222, 322, 422, 522), et où ledit alésage traversant (26, 226, 326, 426, 526) s'étend le long d'un axe de la tige de transmission (22, 222, 322, 422, 522).

3. Transmission à engrenage (200, 300, 400, 500) selon la revendication 2, où
   le support (202, 302, 402, 502) comprend une paire de plaques opposées (202a-202c, 302a-302c, 402a-402c, 502a-502c) et une tige de support (202b, 302b, 402b, 502b) qui relie les deux plaques (202a-202c, 302a-302c, 402a-402c, 502a-502c) ; et où
   la tige de support (202b, 302b, 402b, 502b) traverse l'alésage traversant (226, 326, 426, 526) de la tige de transmission (222, 322, 422, 522).

4. Transmission à engrenage (200, 400) selon la revendication 2 ou la revendication 3, où
   le support (202, 402) comprend une plaque supérieure (202a, 402a) de support, une plaque inférieure (202c, 402c) de support et une tige de support (202b, 402b) ;
   la tige de support (202b, 402b) est formée d'une seule pièce avec la plaque supérieure (202a, 402a) de support, et où
   la tige de support (202b, 402b) traverse l'alésage traversant (226, 326, 426, 526) de la tige de transmission (222, 322, 422, 522).

5. Transmission à engrenage (200, 400) selon l'une des revendications 2 à 4, où
   la tige de transmission (222, 422) comprend en outre une partie de grand diamètre (222a, 422a) et une partie de petit diamètre (222b, 422b) ;

**EP 2 354 594 B1**

la partie de grand diamètre (222a, 422a) entre en contact avec l'alésage traversant (224, 424) de l'engrenage externe (212, 412), et la partie de petit diamètre (222b, 422b) entre en contact avec l'alésage d'ajustement (214, 414) du support (202, 402).

6. Transmission à engrenage (100, 200, 300) selon la revendication 1 ou la revendication 2, où l'engrenage externe (12, 212, 312) comprend une partie mince (12a, 212a, 312a) et une partie épaisse (12b, 212b, 312b), la partie épaisse (12b, 212b, 312b) étant disposée extérieurement à la tige de transmission (22, 222, 422) dans la direction radiale ; et où la partie épaisse (12b, 212b, 312b) s'engrène avec l'engrenage interne (42).

7. Transmission à engrenage (600) selon la revendication 1, où l'élément d'arrêt (618) qui limite le déplacement de la tige de transmission (622) dans la direction de l'axe (32) est prévu en double couche de chaque côté de la tige de transmission (622) dans la direction de l'axe (32).

8. Transmission à engrenage (600) selon la revendication 1 ou la revendication 7, où l'engrenage externe (612) comprend un premier engrenage externe (612X) et un deuxième engrenage externe (612Y), le premier engrenage externe (612X) et le deuxième engrenage externe (612Y) étant symétriques dans une direction excentrée par rapport à l'axe (32) de l'engrenage interne (642) ; le support (602) comprend une plaque supérieure (602a) de support, une plaque inférieure (602c) de support, une tige de support (602b) qui relie la plaque supérieure (602a) de support et la plaque inférieure (602c) de support, et une plaque intermédiaire (660) de support, prévue entre l'engrenage externe (612X) et l'engrenage externe (612Y) ; la tige de transmission (622) comprend une première tige de transmission (622X) et une deuxième tige de transmission (622Y), la première tige de transmission (622X) s'engageant librement dans un alésage d'ajustement (614) de la plaque supérieure (602a) de support, un alésage traversant (624) de l'engrenage externe (612X) et un alésage d'ajustement (662) de la plaque intermédiaire (660) de support, et la deuxième tige de transmission (622Y) s'engageant librement dans un alésage d'ajustement (614) de la plaque inférieure (602c) de support, un alésage traversant (624) de l'engrenage externe (612Y) et l'alésage d'ajustement (662) de la plaque intermédiaire (660) de support.

9. Transmission à engrenage (600) selon la revendication 8, où les tiges de support (602b) sont formées d'une seule pièce avec la plaque supérieure (602a) de support ; la plaque intermédiaire (660) de support est raccordée par sertissage aux tiges de support (602b).

FIG. 1

# FIG. 2

# FIG. 3

FIG. 4

FIG. 5

FIG. 6

# FIG. 7

# FIG. 8

FIG. 9

# FIG. 10

# FIG. 11

# FIG. 12

## FIG. 13

**EP 2 354 594 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006071017 A